# EUROPÄISCHE PATENTSCHRIFT

(11) **EP 1 699 662 B1**
(45) Veröffentlichungstag und Bekanntmachung des Hinweises auf die Patenterteilung: **24.02.2010**
(21) Anmeldenummer: 04802970.6
(22) Anmeldetag: 16.12.2004
(51) Int. Cl.: B60N 2/30, B60N 2/36

(54) **KRAFTFAHRZEUGSITZ**
MOTOR VEHICLE SEAT
SIEGE POUR VEHICULE A MOTEUR

(30) Priorität: 17.12.2003 DE 20319816 U
(43) Veröffentlichungstag der Anmeldung: 13.09.2006
(73) Patentinhaber: Brose Fahrzeugteile GmbH & Co. KG, Coburg, 96450 Coburg (DE)
(72) Erfinder: BÄTZ, Harald, 96476 Bad Rodach (DE); HOFMANN, Jochen, 96257 Marktgraitz (DE)
(74) Vertreter: Baumgärtel, Gunnar
(86) Internationale Anmeldenummer: PCT/DE2004/002785
(87) Internationale Veröffentlichungsnummer: WO 2005/058636

(56) Entgegenhaltungen:
- DE-A1- 4 224 427
- US-A- 4 632 457
- US-A- 4 652 051
- US-A- 5 564 780
- US-A- 5 647 634
- US-A- 5 671 948
- PATENT ABSTRACTS OF JAPAN Bd. 011, Nr. 021 (M-555), 21. Januar 1987 (1987-01-21) & JP 61 193938 A (TACHIKAWA SPRING CO LTD), 28. August 1986 (1986-08-28)

## Beschreibung

Die Erfindung betrifft einen Kraftfahrzeugsitz nach dem Oberbegriff des Anspruchs 1 bzw. des Anspruchs 3 (siehe z.B. US-A-5 564 780).

Ein derartiger Kraftfahrzeugsitz umfasst eine Rückenlehne, die in ihrer aufrechten (in der Regel gegenüber der Vertikalen leicht nach hinten geneigten) Gebrauchsposition eine Stütze für den Rücken eines Sitzbenutzers bildet und die ggf. noch in weitere, stärker nach hinten geneigte Gebrauchpositionen bringbar (schwenkbar) ist; einen schwenkbar gelagerten Polsterträger für ein Sitzpolster, der in seiner Gebrauchsposition eine Sitzfläche für einen Sitzbenutzer definiert; sowie einen Klappmechanismus zum Umklappen des Polsterträgers vor die Rückenlehne, so dass sich der Polsterträger im Wesentlichen entlang der in ihrer aufrechten Funktionsposition befindlichen Rückenlehne erstreckt.

Bei dem Polsterträger kann es sich insbesondere um eine sogenannte Sitzwanne bzw. Sitzschale zur Aufnahme eines Sitzpolsters handeln, die in ihrer waagerechten bzw. gegenüber der Waagerechten etwas geneigten Gebrauchsposition zusammen mit dem darauf befindlichen Sitzpolster eine Sitzfläche definiert, auf der ein Sitzbenutzer Platz nehmen kann.

Dadurch, dass sich der Polsterträger eines gattungsgemäßen Kraftfahrzeugsitzes nach Art eines Kinostuhles (sogenannte Kinostuhlfunktion) in eine aufrechte (im Wesentlichen senkrechte) Lage klappen lässt, kann vor dem Kraftfahrzeugsitz zusätzlicher Stauraum geschaffen werden.

Um sicherzustellen, dass der Polsterträger nach dem Umklappen in seiner hochgeklappten Position verbleibt, ist es bekannt, den Polsterträger in seiner hochgeklappten Position mittels eines Schlosses zu verriegeln. Dies erfordert jedoch zusätzlichen Bauraum für das Schloss und führt zu einer Erhöhung des Gewichtes des Kraftfahrzeugsitzes. Ferner mindert die zum Entriegeln erforderliche Schlossbetätigung den Bedienkomfort der Anordnung.

Aus der o.f. US-A-5 564 780 ist ein Kraftfahrzeugsitz bekannt, bei dem ein schwenkbar gelagerter Polsterträger für ein Sitzpolster mittels eines Klappmechanismus vor eine Rückenlehne verschwenkt werden kann, so dass sich der Polsterträger entlang der Rückenlehne erstreckt, wenn sich diese in ihrer aufrechten Position befindet.

Der Erfindung liegt das Problem zugrunde, einen Kraftfahrzeugsitz der eingangs genannten Art weiter zu verbessern, insbesondere mit einfachen Mitteln eine Verriegelung des Polsterträgers in seiner hochgeklappten Position zu gewährleisten.

Dieses Problem wird erfindungsgemäß einerseits durch die Schaffung eines Kraftfahrzeugsitzes mit den Merkmalen des Anspruchs 1 gelöst.

Danach umfasst der Klappmechanismus, mit dem der Polsterträger in eine aufrechte Position klappbar ist, ein Hebelpaar, dessen einer Hebel schwenkbar am Polsterträger angelenkt ist und dessen anderer Hebel schwenkbar an einer Bodenbaugruppe des entsprechenden Kraftfahrzeugs anzulenken ist, wobei beide Hebel an einem Kniegelenk gelenkig miteinander verbunden sind, wobei die beiden Hebel des Hebelpaares an jenem Kniegelenk in einer Gebrauchsposition des Polsterträgers zunächst einen spitzen Winkel einschließen, der beim Umklappen des Polsterträgers aus der Gebrauchsposition in die im Wesentlichen aufrechte Position vor der Rückenlehne in einen stumpfen Winkel überführt wird. Um den Polsterträger in seiner aufrechten Position zu halten, in der er sich im Wesentlichen vor der Rückenlehne des entsprechenden Fahrzeugsitzes erstreckt, sind elastische Mittel vorgesehen, die an mindestens einem der Hebel angreifen und einer Rückstellbewegung des Polsterträgers entgegenwirken.

Durch das Überfahren der (neutralen) Winkelstellung von 180°, also das Überführen eines (von den beiden Hebeln des Hebelpaares begrenzten) zunächst spitzen Winkels in einen stumpfen Winkel nimmt das Hebelpaar eine neue stabile Lage ein, die durch die am Polsterträger angreifenden Gewichtskräfte nicht ohne weiteres wieder in den vorherigen Zustand zurückbewegbar ist, in dem die beiden Hebel einen spitzen Winkel einschlossen und sich der Polsterträger in seiner (im Wesentlichen waagerechten) Gebrauchsposition befand.

Dabei sind bevorzugt Mittel vorgesehen, die den maximal erreichbaren (stumpfen) Winkel zwischen den beiden Hebeln des Hebelpaares begrenzen, indem beim Erreichen eines stumpfen Winkels mit einem definierten Wert größer als 180° eine weitere Zunahme dieses Winkels verhindert wird. Hierzu eignet sich beispielsweise ein Anschlag, der die mögliche Bewegung mindestens eines Hebels des Hebelpaares beim Umklappen des Polsterträgers in eine aufrechte Position begrenzt.

Dabei sind die Anlenkstellen der beiden Hebel sowie deren Kniegelenk derart bezüglich der Schwenkachse des Polsterträgers angeordnet (um die der Polsterträger klappbar ist), dass beim Überschreiten des Winkels von 180° beim Hochklappen des Polsterträgers ein Zurückklappen des Polsterträgers unter der Wirkung der am Polsterträger angreifenden Gewichtskräfte nicht möglich ist. Vielmehr haben Gewichtskräfte, die an dem hochgeklappten Polsterträger angreifen, die Tendenz, den stumpfen Winkel zwischen den beiden Hebeln des Hebelpaares noch zu vergrößern und dadurch ein Verklemmen der Anordnung auszulösen.

Hierdurch wird eine Rückkehr des Polsterträgers in die Gebrauchsposition aufgrund der am hochgeklappten Polsterträger wirkenden Gewichtskräfte verhindert.

Nach einem anderen Aspekt der Erfindung, der vorteilhaft mit der vorgenannten Erfindungsvariante kombiniert werden kann, ist gemäß Anspruch 3 in einem der Hebel des Hebelpaares, das als ein Gelenkhebelpaar ausgebildet ist, dessen einer Hebel schwenkbar am Polsterträger angelenkt ist und dessen anderer Hebel schwenkbar an einer Bodenbaugruppe des entsprechenden Kraftfahrzeugs anzulenken ist, eine Führungseinrichtung, insbesondere in Form einer Führungskulisse vorgesehen, in der das Kniegelenk des Hebelpaares geführt ist, wobei die Führungseinrichtung eine Unstetigkeitsstelle aufweist, die das Kniegelenk überfährt, wenn der Polsterträger aus einer Gebrauchsposition heraus vor die Rückenlehne geklappt wird. Durch die Unstetigkeitsstelle, die insbesondere als eine Knickstelle der Führungseinrichtung ausgebildet sein kann, wird ein Zurückklappen des Polsterträgers in die Gebrauchsposition verhindert, indem die Führungseinrichtung an der Unstetigkeitsstelle (Knickstelle) derart abgewinkelt ist, dass ein Überfahren der Unstetigkeitsstelle durch das Kniegelenk aufgrund der an dem hochgeklappten Polsterträger angreifenden Gewichtskräfte verhindert wird. Auch bei dieser Erfindungsvariante sind elastische Mittel vorgesehen, die an mindestens einem der Hebel angreifen und einer Rückstellbewegung des Polsterträgers entgegenwirken, um den Polsterträger in seiner aufrechten Position zu halten.

Beide Erfindungsvarianten beruhen auf dem gemeinsamen technischen Prinzip, dass eine Verriegelung des hochgeklappten Polsterträgers gegenüber an dem Polsterträger angreifenden Gewichts- oder Beschleunigungskräften durch das Überfahren einer Unstetigkeitsstelle erfolgt, nämlich im einen Fall durch das Überfahren der Winkelstellung von 180° zwischen den beiden Hebeln des vorderen Hebelpaares und im anderen Fall durch das Überfahren einer insbesondere durch eine Knickstelle gebildeten Unstetigkeitsstelle einer Führungseinrichtung an einem Hebel des Hebelpaares.

Zur Begrenzung der Schwenkbewegung beim Hochklappen des Polsterträgers vor die Rückenlehne des Kraftfahrzeugsitzes, d. h. um den hierbei durchlaufenden Stellweg zu begrenzen, kann ein Anschlag vorgesehen sein, der z.B. die Bewegung eines Hebels des Hebelpaares begrenzt, und zwar insbesondere die Bewegung eines an einer Bodenbaugruppe des Kraftfahrzeugs anzulenkenden Hebel des Hebelpaares.

Gemäß einer Ausführungsform der Erfindung ist der Anschlag an der Bodenbaugruppe des Kraftfahrzeugs vorzusehen. Gemäß einer anderen Ausführungsform der Erfindung ist der Anschlag an dem anderen der beiden Hebel vorgesehen und kann dabei insbesondere durch einen Endanschlag einer in dem entsprechenden Hebel vorgesehenen Führungseinrichtung gebildet werden, in der das Kniegelenk des Hebelpaares geführt wird, wobei jener Endanschlag bevorzugt hinter einer Unstetigkeitsstelle (Knickstelle) der Führungseinrichtung in einem abgewinkelten Endabschnitt des entsprechenden Hebels ausgebildet ist.

Unter einer Führungseinrichtung werden hier allgemein Führungsmittel verstanden, in denen das Gelenk des entsprechenden Hebelpaares geführt werden kann. Hierbei kann es sich beispielsweise um eine Führungskulisse, insbesondere in Form eines Langloches, handeln; es ist jedoch auch eine Ausbildung der Führungseinrichtung als Führungsschiene, als Führungssteg, als im Querschnitt U-förmige Führung usw. möglich.

Für das Zurückklappen des Polsterträgers in die Gebrauchsposition kann beispielsweise ein Betätigungselement in Form einer Betätigungsschlaufe oder eines Betätigungsgriffes an einem Hebel des Hebelpaares vorgesehen sein, und zwar insbesondere an dem mit dem Polsterträger verbundenen (oberen) Hebel.

Hierbei wird ausgenutzt, dass beim Hochklappen des Polsterträgers in eine aufrechte Position ein von den beiden Hebeln begrenzter, zunächst spitzer Winkel in einen stumpfen Winkel überführt wird. Dies ermöglicht eine derartige Anordnung und Ausbildung der elastischen Mittel, dass diese eine Rückstellbewegung der beiden Hebel vom stumpfen Winkel zu einem spitzen Winkel verhindern.

Gemäß einer Ausführungsform der Erfindung sind die elastischen Mittel am Kniegelenk angeordnet, z. B. in Form einer Drehfeder, die das Gelenk umschlingt und mit ihren beiden Schenkeln an je einem der beiden Hebel angreift.

Nach einer anderen Ausführungsform der Erfindung handelt es sich bei den elastischen Mitteln um eine Linearfeder, die an genau einem der beiden Hebel angreift, insbesondere an dem mit der Bodenbaugruppe des Kraftfahrzeugs zu verbindenden (unteren) Hebel. Die Linearfeder ist dabei vorzugsweise als Schraubenfeder in Form einer Zugfeder ausgebildet.

Schließlich können die elastischen Kräfte auch durch ein Zusammenwirken des Lehnenpolsters mit dem Sitzpolster aufgebracht werden, wenn diese in der hochgeklappten Position des Polsterträgers zusammenwirken.

In der Gebrauchsposition des Polsterträgers stützt sich das Kniegelenk bevorzugt an einer Bodenbaugruppe des Fahrzeugs ab und wird beim Hochklappen des Polsterträgers in eine aufrechte Lage von der Bodenbaugruppe abgehoben.

Gemäß einer besonders bevorzugten Weiterbildung der Erfindung ist für die Gewinnung zusätzlichen Stauraumes oberhalb des Sitzes außerdem die Rückenlehne nach vorne auf den in seiner Gebrauchsposition befindlichen Polsterträger klappbar. Bei einem derartigen Fahrzeugsitz besteht also alternativ die Möglichkeit, durch Hochklappen des Polsterträgers zusätzlichen Stauraum vor dem Sitz zu schaffen oder durch das Vorklappen der Rückenlehne in Richtung auf das Sitzpolster zusätzlichen Stauraum oberhalb des Sitzes zu schaffen.

Um hierbei den zu schaffenden Stauraum oberhalb des Sitzes zu maximieren, ist es vorteilhaft, beim Vorklappen der Rückenlehne in Richtung auf die Sitzfläche zugleich den Polsterträger abzusenken. Hierzu ist die Schwenkachse des Polsterträgers, um die dieser in seine aufrechte Position klappbar ist, an einem hinteren Hebel ausgebildet, der mit seinem der Schwenkachse des Polsterträgers abgewandten Ende an einer Bodenbaugruppe des Kraftfahrzeugs gelagert wird. Durch Verschwenken dieses hinteren Hebels, der an der Schwenkachse des Polsterträgers angreift, kann der Polsterträger abgesenkt werden. Um ein Verschwenken des hinteren Hebels und damit ein Absenken des Polsterträgers mit dem Vorklappen der Rückenlehne zu koordinieren, ist ein Koppelhebel vorgesehen, der einerseits an der Rückenlehne angelenkt ist und andererseits an dem besagten hinteren Hebel. Dieser Koppelhebel wirkt beim Vorklappen der Rückenlehne in Richtung der Sitzfläche auf den hinteren Hebel des Polsterträgers ein, so dass beim Vorklappen der Rückenlehne eine Schwenkbewegung jenes hinteren Hebels stattfindet, die zum gleichzeitigen Absenken des Polsterträgers führt.

Alternativ oder zusätzlich zu dem Überführen eines zunächst spitzen Winkels zwischen den beiden Hebeln des vorderen Hebelpaares in einen stumpfen Winkel kann vorgesehen sein, das Kniegelenk des vorderen Hebelpaares in einer Führungseinrichtung zu führen, die eine Unstetigkeitsstelle (z.B. in Form eines Knickes) aufweist, welche von dem Gelenk unmittelbar vor Erreichen der angestrebten hochgeklappten (aufrechten) Position des Polsterträgers überfahren wird. Die Führungseinrichtung kann hierzu als Führungskulisse nach dem Schlüssellochprinzip ausgestaltet sein bzw. mit dem darin geführten Gelenk nach Art eines Bajonettverschlusses zusammenwirken, so dass das Gelenk im hochgeklappten Zustand des Polsterträgers in einem Bereich der Kulissenführung jenseits der Unstetigkeitsstelle aufgenommen und in stabiler Lage gehalten wird. Damit ist das Hebelpaar in einer definierten Position stabilisiert und der Polsterträger wird in aufrechter, hochgeklappter Stellung gehalten.

Weitere Merkmale und Vorteile der Erfindung werden bei der nachfolgenden Beschreibung eines Ausführungsbeispiels anhand der Figuren deutlich werden.

Es zeigen:
- Fig. 1: einen Kraftfahrzeugsitz mit einer auf die Sitzfläche vorklappbaren Rückenlehne und einem vor die aufrechte Rückenlehne klappbaren Polsterträger für ein Sitzpolster, jeweils in ihrer Gebrauchsposition;
- Fig.2: den Kraftfahrzeugsitz aus Figur 1 nach dem Hochklappen des Polsterträgers vor die Rückenlehne;
- Fig. 3: den Kraftfahrzeugsitz aus Figur 1 nach dem Vorklappen der Rückenlehne in Richtung auf die Sitzfläche;
- Fig.4: eine Abwandlung des Kraftfahrzeugsitzes aus Figur 1 in seiner Gebrauchsposition;
- Fig. 5: den Kraftfahrzeugsitz aus Figur 4 nach dem Hochklappen des Polsterträgers vor die Rückenlehne.

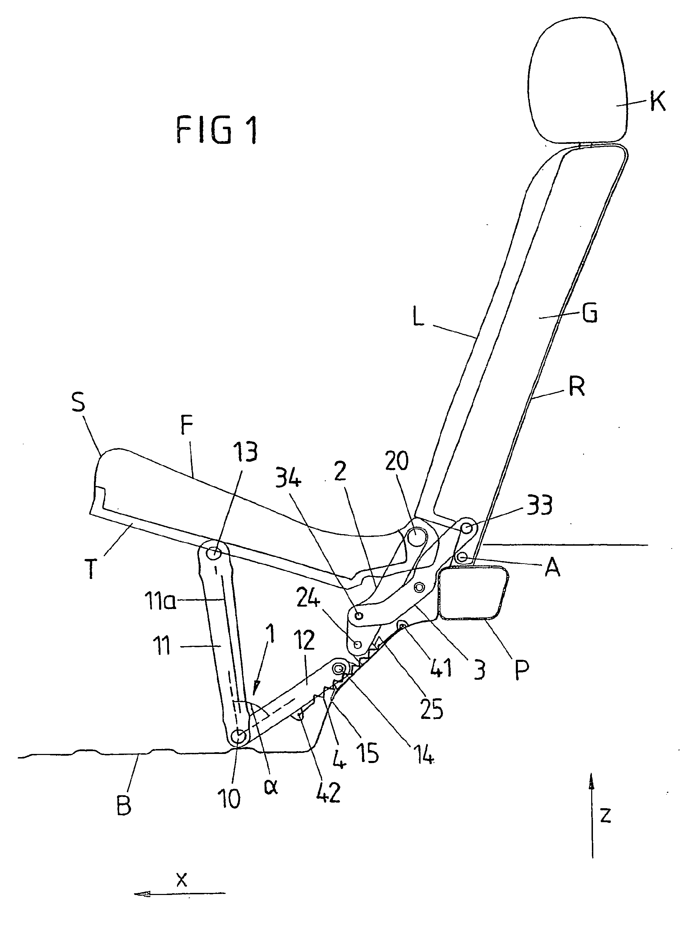

Figur 1 zeigt einen Kraftfahrzeugsitz, insbesondere Rücksitz, mit einem Polsterträger T in Form einer Sitzwanne bzw. Sitzschale, die ein Sitzpolster S trägt, welches eine Sitzfläche F für einen Sitzbenutzer definiert. Ferner weist der Fahrzeugsitz eine um eine Achse A verschwenkbar gelagerte Rückenlehne R auf, die ein Lehnengestell G mit einem daran angeordneten Lehnenpolster L zum Abstützen des Rückens eines Sitzbenutzers aufweist und die eine Kopfstütze K trägt. Die Rückenlehne R befindet sich in dem in Figur 1 gezeigten Zustand in einer aufrechten Gebrauchsposition, in der sie regelmäßig gegenüber der Vertikalen leicht nach hinten geneigt ist.

Der Polsterträger T ist seinem (in Sitzlängsrichtung x betrachtet) mittleren Bereich über ein Gelenkhebelpaar 1 mit der Bodenbaugruppe B eines Kraftfahrzeugs gelenkverbunden und in seinem (wiederum in Sitzlängsrichtung x betrachtet) hinteren Bereich zusätzlich über einen hinteren Schwenkhebel 2 mit der Bodenbaugruppe B gelenkverbunden, wobei der hintere Schwenkhebel 2 an seinem dem Polsterträger T zugewandten Ende zugleich eine Schwenkachse 20 des Polsterträgers T definiert.

Das vordere Gelenkhebelpaar 1 besteht aus einem primären Schwenkhebel 11, der einerseits mit einem ersten, oberen Ende über ein Gelenk 13 schwenkbar am Polsterträger T in dessen (in Sitzlängsrichtung x betrachtet) mittlerem Bereich verschwenkbar angelenkt ist und andererseits mit seinem anderen, unteren Ende über ein Kniegelenk 10 mit dem sekundären Schwenkhebel 12 des Gelenkhebelpaares 1 gelenkverbunden ist. Der sekundäre Schwenkhebel 12 ist wiederum mit seinem dem Kniegelenk 10 abgewandten Ende über einen Lagerbock 15 und ein dort vorgesehenes Gelenk 14 schwenkbar an der Bodenbaugruppe B des Kraftfahrzeugs angelenkt. Das Kniegelenk 10 stützt sich dabei in der in Figur 1 gezeigten Gebrauchsposition des Polsterträgers T, in der dieser etwas gegenüber der Horizontalen geneigt ist, an der Bodenbaugruppe B ab und kann dort gegebenenfalls lösbar verriegelt sein.

Der sekundäre Schwenkhebel 12 des vorderen Gelenkhebelpaares 1 wird mittels eines Federelementes 4 in Form einer als Schraubenfeder ausgebildeten Zugfeder in der Position gehalten, in der das am einen Ende des sekundären Schwenkhebels 12 vorgesehene Kniegelenk 10 sich an der Bodenbaugruppe B abstützt. Hierzu ist das Federelement 4 mit einem Ende 41 an der Bodenbaugruppe B fixiert (eingehängt) und mit dem anderen Ende an dem anderen Ende an dem sekundären Schwenkhebel 12 fixiert (eingehängt).

Der hintere Schwenkhebel 2, über den der Polsterträger T im Bereich seines (in Fahrzeuglängsrichtung x betrachtet) hinteren Endes mit der Bodenbaugruppe B gelenkverbunden wird, ist ebenfalls über einen Lagerbock 25 und ein dort vorgesehenes Gelenk 24 schwenkbar an der Bodenbaugruppe B angelenkt. Mit seinem anderen, der Bodenbaugruppe B abgewandten Ende ist der hintere Schwenkhebel 2 über ein Gelenk mit dem Polsterträger T verbunden, das zugleich die unmittelbar unterhalb der Rückenlehne R liegende Schwenkachse 20 des Polsterträgers T definiert.

Der hintere Schwenkhebel 2 ist wiederum über einen Koppelhebel 3 mit dem Lehnengestell G der Rückenlehne R verbunden, der mit seinem einen Ende über ein Gelenk 33 am Lehnengestell G und mit seinem anderen Ende über ein Gelenk 34 an dem hinteren Schwenkhebel 2 angelenkt ist.

Der in Figur 1 gezeigte Gebrauchszustand des Kraftfahrzeugsitzes ist einerseits charakterisiert durch den bereits beschriebenen Verlauf des Polsterträgers T und der Sitzfläche F mit leichter Neigung gegenüber der Sitzlängsrichtung bzw. Fahrzeuglängsachse x, so dass hierauf ein Fahrzeuginsasse Platz nehmen kann, und andererseits durch eine im Wesentlichen aufrechte und nur leicht gegenüber der Vertikalen z geneigte Erstreckung der Rückenlehne R oberhalb eines Stützpfeilers P der Bodenbaugruppe B, so dass das Lehnenpolster L zum Abstützen des Rückens eines Sitzbenutzers dienen kann.

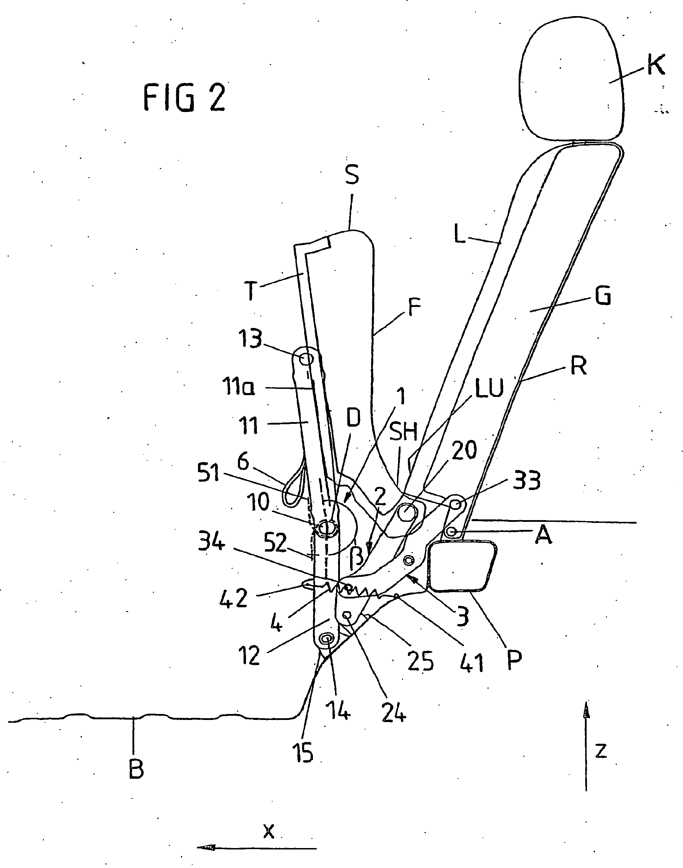

Figur 2 zeigt den Fahrzeugsitz aus Figur 1 nach Ausübung der sogenannten Kinostuhlfunktion, d. h. nach dem Hochklappen des Polsterträgers T zusammen mit dem Sitzpolster S vor die Rückenlehne R und deren Lehnenpolster L. Dies wird ermöglicht durch ein Verschwenken des Polsterträgers T um die Schwenkachse 20 am oberen Ende des hinteren Schwenkhebels 2, wobei das Gelenkhebelpaar 1 derart bewegt wird, dass die beiden Schwenkhebel 11, 12 des Gelenkhebelpaares 1, die in dem in Figur 1 gezeigten Gebrauchszustand des Fahrzeugsitzes einen spitzen Winkel α einschlossen, nunmehr einen stumpfen Winkel β von etwas mehr als 180° bilden.

Als Folge des Hochklappens der Polsterträgers T nehmen das Kniegelenk 10 und die beiden weiteren Gelenke 13, 14 des vorderen Gelenkhebelpaares 1 eine solche Position zueinander ein, dass auf den Polsterträger T wirkende Kräfte, die die Tendenz haben, diesen um seine Schwenkachse 20 wieder nach vorne in Richtung auf seine Gebrauchslage zu klappen, zu einer Vergrößerung des stumpfen Winkels β zwischen dessen beiden Schwenkhebeln 11, 12 führen würden. Dies ist jedoch nicht möglich, da der sekundäre Schwenkhebel 12 des vorderen Gelenkhebelpaares 1 in seiner Bewegung begrenzt ist durch den als Anschlag wirkenden Lagerbock 25 für das untere Ende des hinteren Schwenkhebels 2. Hierdurch können die beiden Schwenkhebel 11, 12 des vorderen Gelenkhebelpaares 1 nicht weiter einknicken, um den stumpfen Winkel β noch zu vergrößern. Dabei kann sich der Polsterträger T gemäß einer Ausführungsform an einem am primären Schwenkhebel 11 des Gelenkhebelpaares vorgesehenen Anschlag 11 a abstützen.

Eine Schwenkbewegung allein des primären Schwenkhebels 11 des Gelenkhebelpaares 1 um das Kniegelenk 10 nach vorne (was ebenfalls ein Zurückklappen des Polsterträgers T in seine Gebrauchslage zur Folge hätte) kann deshalb nicht erfolgen, weil das Kniegelenk 10 und die Schwenkachse 20 des Polsterträgers T auseinanderfallen, so dass eine gemeinsame Schwenkbewegung des primären Schwenkhebels 11 des vorderen Gelenkhebelpaares 1 und des Polsterträgers T um die jeweilige Schwenkachse 10 bzw. 20 nicht möglich ist.

Ein Zurückklappen des Polsterträgers T in seine Gebrauchslage unter erneuter Bildung eines spitzen Winkels α der beiden Schwenkhebel 1.1, 12 des vorderen Gelenkhebelpaares 1 wird weiterhin dadurch verhindert, dass in der hochgeklappten Position des Polsterträgers T das Lehnenpolster L in einem unteren Abschnitt LU den hinteren Bereich SH des Sitzpolsters S übergreift und auf diesem aufliegt, so dass zwischen den beiden Polstern L, S elastische Kräfte wirken, die einem Zurückklappen des Polsterträgers T zusammen mit dem Sitzpolster S in die Gebrauchslage entgegenstehen.

Ferner wirkt das als Linearfeder ausgebildete Federelement 4, welches an dem sekundären Schwenkhebel 12 des vorderen Gelenkhebelpaares 1 angreift, nun derart auf diesen ein, dass es die Tendenz hat, einen stumpfen Winkel β zwischen den beiden Schwenkhebeln 11, 12 des vorderen Gelenkhebelpaares 1 aufrecht zu erhalten, indem es den sekundären Schwenkhebel 12 gegen den als Anschlag wirkenden Lagerbock 25 zieht.

Wenn bereits durch das Verspannen (Verklemmen) der Gelenke 10, 13, 14 des vordern Gelenkhebelpaares 1 und/oder durch das Zusammenwirken des Lehnenpolsters L mit dem Sitzpolster S der Polsterträger T in seinem vor die Rückenlehne R hochgeklappten Zustand hinreichend stabilisiert ist, dann kann auf das zusätzliche Federelement 4, welches an dem hinteren Schwenkhebel 2 angreift, verzichtet werden.

Weiterhin kann anstelle eines Federelementes 4 in Form einer Linearfeder auch eine Drehfeder verwendet werden, um die beiden Schwenkhebel 11, 12 des vorderen Gelenkhebelpaares 1 in der Lage zu stabilisieren, in der sie einen stumpfen Winkel β bilden und in der sich der Polsterträger T im Wesentlichen aufrecht entlang der Rückenlehne R erstreckt. Eine hierfür geeignete, in Figur 2 mit gestrichelten Linien angedeutete Drehfeder D wird auf dem Kniegelenk 10 des vorderen Gelenkhebelpaares 1 angeordnet und stützt sich mit ihren beiden Schenkeln 51, 52 derart an den beiden Schwenkhebeln 11, 12 des vorderen Gelenkhebelpaares 1 ab, dass diese in ihrer stumpfen Winkel β bildenden Lage stabilisiert werden.

Die vorangehenden Betrachtungen und Erläuterungen gingen stets aus von einem spitzen Winkel α, der von den beiden Schwenkhebeln 11, 12 des vorderen Gelenkhebelpaares 1 eingeschlossen wird, wenn sich der Polsterträger T in seiner Gebrauchsposition befindet, und der in einen stumpfen Winkel β überführt wird, wenn der Polsterträger T in eine im Wesentlichen aufrechte Position vor die Rückenlehne R geklappt wird, wobei der stumpfe Winkel β nur wenige Grad oberhalb des Grenzwinkels von 180° liegt. Selbstverständlich kann bei der Betrachtung auch von dem dem spitzen Winkel α benachbarten stumpfen Winkel ausgegangen werden, der von den beiden Schwenkhebeln 11, 12 des vorderen Gelenkhebelpaares 1 zunächst eingeschlossen wird und der beim Hochklappen des Polsterträgers T in eine im Wesentlichen aufrechte Lage in einen spitzen Winkel (dem stumpfen Winkel β benachbart) überführt wird, der etwas weniger als 180° beträgt.

Entscheidend ist, dass ein von den beiden Schwenkhebeln 11, 12 des vorderen Gelenkhebelpaares 1 zunächst eingeschlossener spitzer oder stumpfer Winkel (je nach Betrachtungsweise) beim Hochklappen des Sitzpolsters T in einen stumpfen bzw. spitzen Winkel überführt wird, also ein anfänglicher spitzer in einen stumpfen Winkel und ein anfänglicher stumpfer in einen spitzen Winkel. Hierdurch lässt sich erreichen, dass aufgrund der Anordnung der einzelnen Gelenke 10, 13, 14 des vorderen Gelenkhebelpaares 1 sowie der Schwenkachse 20 des Polsterträgers T die Anordnung insgesamt derart verspannt bzw. verklemmt wird, dass der Polsterträger T in seiner aufrechten Lage gehalten wird.

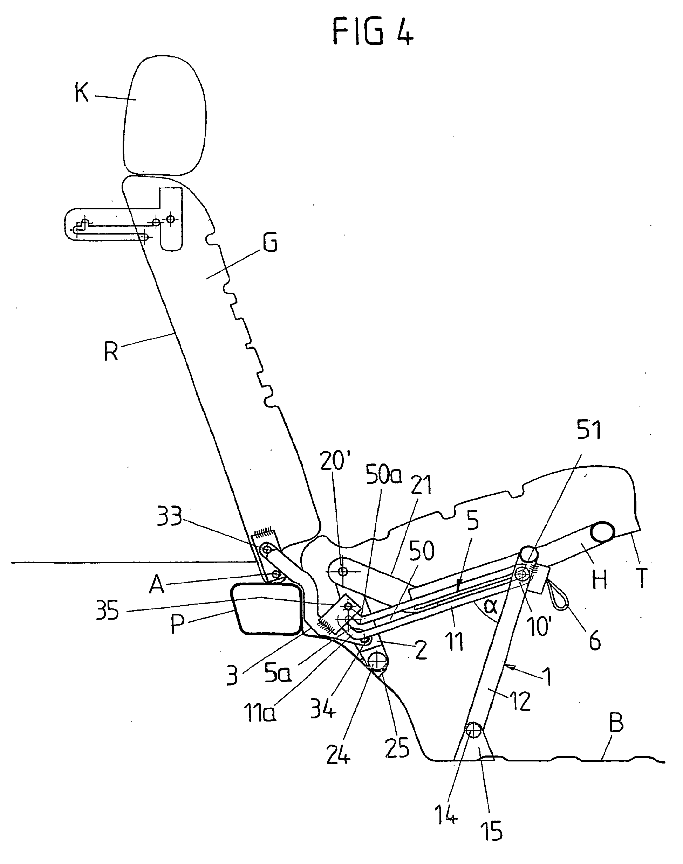

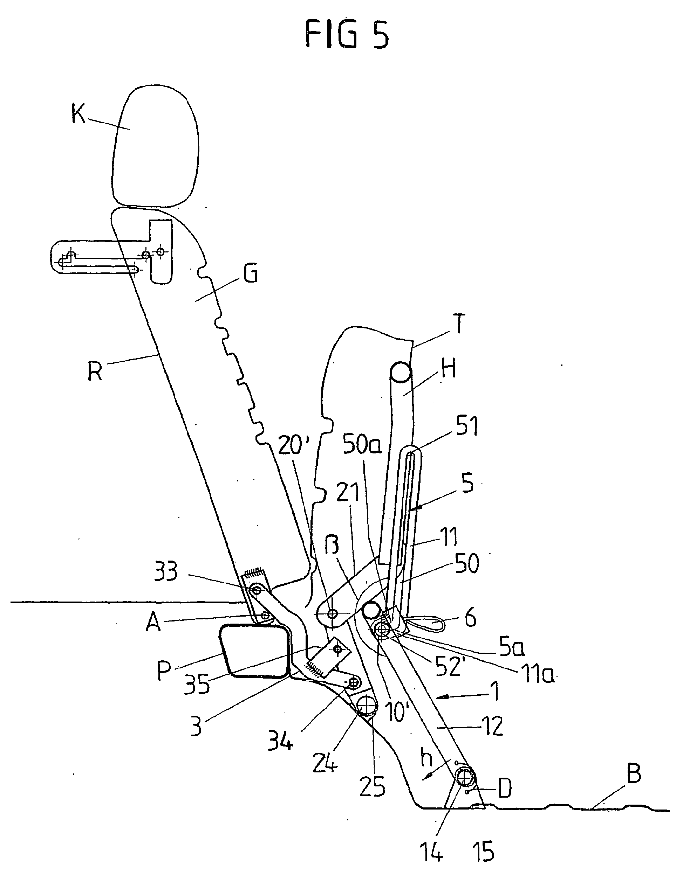

Alternativ oder zusätzlich zu dem Überführen eines zunächst spitzen Winkels α zwischen zwei Schwenkhebeln 11, 12 des vorderen Gelenkhebelpaares 1 in einen stumpfen Winkel β kann vorgesehen sein, das Kniegelenk 10 des vorderen Gelenkhebelpaares 1 in einer Kulissenführung zu führen, die unmittelbar vor Erreichen der angestrebten hochgeklappten (aufrechten) Position des Polsterträgers T eine Unstetigkeitsstelle (z.B. durch Abknicken) aufweist und nach dem Schlüsseilochprinzip ausgestaltet sein kann bzw. mit dem darin geführten Gelenk nach Art eines Bajonettverschlusses zusammenwirkt, so dass das Gelenk 10 im hochgeklappten Zustand des Polsterträgers in einem Bereich der Kulissenführung jenseits der Unstetigkeitsstelle aufgenommen wird. Damit ist das Gelenkhebelpaar 1 in einer bestimmten Lage stabilisiert und der Polsterträger T wird in aufrechter, hochgeklappter Stellung gehalten. Dies wird weiter unten anhand der Figuren 4 und 5 näher erläutert werden.

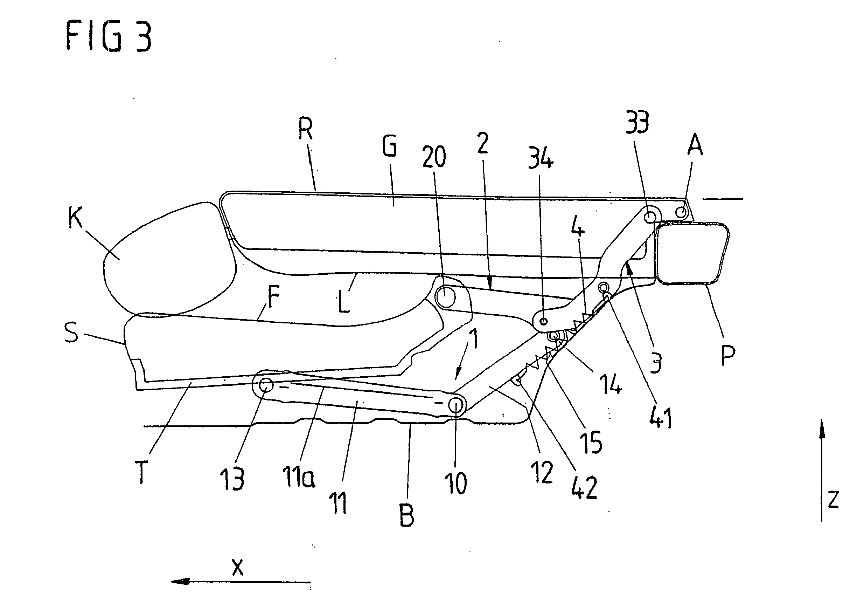

Figur 3 zeigt den Fahrzeugsitz aus Figur 1 in einem Zustand, in dem die Rückenlehne R in Richtung auf die durch das Sitzpolster S definierte Sitzfläche, F vorgeklappt ist. Dieses Vorklappen erfolgt in bekannter Weise durch Verschwenken der Rückenlehne R um ihre Schwenkachse A. Aufgrund der Koppelung der Rückenlehne R mit dem hinteren Schwenkhebel 2 des Polsterträgers T, der zugleich auch dessen Schwenkachse 20 bildet, erfolgt hierbei eine Schwenkbewegung des hinteren Schwenkhebels 2 um dessen bodenseitiges Gelenk 24, wobei die am anderen Ende des hinteren Schwenkhebels 2 vorgesehene Schwenkachse 20 des Polsterträgers T zur Bodenbaugruppe B hin abgesenkt wird, unter gleichzeitiger Bewegung in Sitzlängsrichtung x nach vorne, weg von der Rückenlehne R. Hiermit geht eine entsprechende Schwenkbewegung des primären Schwenkhebels 11 des vorderen Gelenkhebelpaares 1 einher, die zu einem Absenken der Vorderkante des Polsterträgers T führt. Durch die kombinierte Bewegung des hinteren Schwenkhebels 2 (und dem damit einhergehenden Absenken der Schwenkachse 20 am hinteren Ende des Polsterträgers T) sowie des primären Schwenkhebels 11 des vorderen Gelenkhebelpaares 1 (und dem damit verbundenen Absenken der Vorderkante des Polsterträgers T) wird der Polsterträger T beim Vorklappen der Rückenlehne R in Richtung auf die Sitzfläche F insgesamt abgesenkt.

Hierdurch wird maximaler Stauraum oberhalb der vorgeklappten Rückenlehne R des Kraftfahrzeugsitzes zur Verfügung gestellt.

In Figur 4 ist eine Abwandlung des Kraftfahrzeugsitzes aus Figur 1 dargestellt, bei der der primäre Schwenkhebel 11 des vorderen Gelenkhebelpaares 11, 12 nicht schwenkbar an dem Polsterträger T des Fahrzeugsitzes angelenkt, sondern vielmehr starr an einem am Polsterträger T vorgesehenen Halter H angeordnet, d.h., mit diesem verbunden bzw. an diesem angeformt ist.

Entlang des primären Schwenkhebels 11 verläuft eine durch ein abgewinkeltes Langloch 50 gebildete Führungskulisse 5, die sich zwischen zwei Endanschlägen 51, 52 erstreckt und deren zweiter Endanschlag 52 hinter einer Unstetigkeitsstelle 50a in Form eines Knickes der Führungskulisse 5 gebildet ist. Hinter diesem Knick 50a verläuft ein abgewinkelter Endabschnitt 5a der Führungskulisse 5 in einem abgewinkelten Abschnitt 11a des primären Schwenkhebels 11 bis zu dem dortigen, zweiten Endanschlag 52.

Das Kniegelenk 10', über das der primäre Schwenkhebel 11 und der mittels eines bodenseitiges Gelenkes 14 und eines Lagerbockes 15 an einer Bodenbaugruppe B des Kraftfahrzeugs angelenkte sekundäre Schwenkhebel 12 gelenkig miteinander verbunden sind, ist vorliegend als ein vom sekundären Schwenkhebel 12 abstehendes Führungselement in Form eines Führungsbolzens ausgebildet, das in der durch ein abgewinkeltes Langloch 50 gebildeten Führungskulisse 5 des primären Schwenkhebels 11 geführt ist. In der in Figur 4 dargestellten Gebrauchsposition des Kraftfahrzeugsitzes liegt das das Kniegelenk bildende Führungselement 10' dabei an dem ersten Anschlag 51 des sich im primären Schwenkhebel 11 als Führungskulisse 5 erstreckenden Langloches 50 an.

Wird der in Figur 4 dargestellte Kraftfahrzeugsitz durch Ausübung der bereits vorstehend anhand der Figuren 1 bis 3 erläuterten Kinostuhlfunktion, d. h. durch Hochklappen des Polsterträgers T vor die Rückenlehne R des Kraftfahrzeugsitzes, in den in Figur 5 dargestellten kompakteren Zustand überführt, so wandert hierbei das das Kniegelenk bildende Führungselement 10' entlang der durch das Langloch 50 gebildeten Führungskulisse 5 des primären Verriegelungselementes 11 bis zu dem in dem abgewinkelten Endabschnitt 5a der Führungskulisse 5 hinter dem Knick 50a liegenden zweiten Anschlag 52.

Durch das Auftreffen des Führungselementes 10' auf den zweiten Anschlag 52 der Führungskulisse 5 wird das Hochklappen des Polsterträgers T, welches - wie bei dem anhand der Figuren 1 und 2 dargestellten Ausführungsbeispiel - einer Schwenkbewegung um eine durch den hinteren Schwenkhebeln 2 definierte Schwenkachse 20' entspricht, beendet. Der hintere Schwenkhebel 2 ist dabei vorliegend mit dem Polsterträger T zur Bildung der Schwenkachse über einen am Polsterträger 1 (genauer an einem Sitzseitenteil) starr angeordneten Fortsatz 21 gelenkverbunden. Wie auch bei dem anhand der Figuren 1 und 2 dargestellten Ausführungsbeispiel wird dabei ein von den beiden Schwenkhebeln 11, 12 des vorderen Gelenkhebelpaares 1 ursprünglich eingeschlossener spitzer Winkel α in einen stumpfen Winkel β überführt.

In diesem Zustand ist der Polsterträger T gegen ein Vorklappen in Richtung auf die Figur 4 dargestellte Gebrauchsposition insbesondere dadurch gesichert, dass er wegen der durch einen Knick 50a gebildeten Unstetigkeitsstelle in der als Langloch 50 ausgebildeten abgewinkelten Führungskulisse 5 mit dem im abgewinkelten Endabschnitt 5a der Führungskulisse 5 ausgebildeten Anschlag 52 verklemmt wird, was einer Rückkehrbewegung des Polsterträgers T in die Gebrauchsposition entgegenwirkt. Mit anderen Worten ausgedrückt, ist der abgeknickte, den zweiten Endanschlag 52 bildende Endabschnitt 5a der Führungskulisse 5 am primären Schwenkhebel 11 so ausgebildet, dass am Polsterträger T angreifende, in Richtung auf ein Vorklappen des Polsterträgers T wirkende Gewichtskräfte F, vergleiche Figur 5, das zwischen der Knickstelle 50a und dem dahinter angeordneten Endanschlag 52 der Führungskulisse 5 aufgenommene Führungselement 10' nicht aus der Endposition befreien können, in der es zwischen Knickstelle 50a und Endanschlag 52 eingeklemmt ist. D: h., Gewichtskräfte, die wegen des Eigengewichtes des Polsterträgers T über den Polsterträger T und somit auch über das primäre Verriegelungselement 11 eingeleitet werden, führen aufgrund der Geometrie der Führungskulisse 5 nicht zu einem Zurückklappen des Polsterträgers T in die in Figur 4 dargestellte Gebrauchsposition. Es wird also eine Rückkehr des Polsterträgers in die Gebrauchsposition aufgrund der am hochgeklappten Polsterträger wirkenden Gewichtskräfte verhindert. Zum Zurückklappen des Polsterträgers T in die Gebrauchsposition ist vielmehr eine entsprechend Kraft auf den sekundären Schwenkhebel 12 auszuüben, an dem hierfür ein Betätigungselement 6 in Form einer Schlaufe angeordnet ist.

Zur Fixierung des Führungselementes 10' zwischen der Unstetigkeitsstelle bzw. Knickstelle 50a und dem zweiten Endanschlag 52 der Führungskulisse 5 kann ferner, wie in Figur 5 angedeutet, ein z.B. als Drehfeder D ausgebildetes elastisches Element vorgesehen sein, das den sekundären Schwenkhebel 12 des vorderen Gelenkhebelpaares 1 in einer Richtung h vorspannt, die derjenigen Richtung entgegengesetzt ist, entlang der der sekundäre Schwenkhebel 12 bewegt werden müsste, um den Polsterträger T in die in Figur 4 dargestellte Gebrauchsposition zu bringen. Das elastische Element in Form einer Drehfeder D kann zudem als Klapperschutz dienen.

Hinsichtlich weiterer Einzelheiten und Bauteile des in den Figuren 4 und 5 dargestellten Kraftfahrzeugsitzes wird auf die Erläuterung zu den entsprechenden, mit gleichen Bezugszeichen versehenen Bauteilen des anhand der Figuren 1 bis 3 erläuterten Kraftfahrzeugsitzes hingewiesen, wobei vorliegend der Koppelhebel 3 zusätzlich über einen starr hiervon abragenden Fortsatz 35 mit dem hinteren Schwenkhebel 2 gelenkverbunden ist.

## Patentansprüche

1. Kraftfahrzeugsitz mit
- einer Rückenlehne (R), die zur Bildung einer Stütze für den Rücken eines Sitzbenutzers in eine aufrechte Gebrauchsposition bringbar ist,
- einem schwenkbar gelagerten Polsterträger (T) für ein Sitzpolster (S), der in seiner Gebrauchsposition eine Sitzfläche für einen Sitzbenutzer definiert, und
- einem Klappmechanismus (1, 2) zum Umklappen des Polsterträgers (T) vor die Rückenlehne(R), so dass sich der Polsterträger (T) im Wesentlichen entlang der Rückenlehne (R) erstreckt, wenn sich diese in ihrer aufrechten Gebrauchsposition befindet,
**dadurch gekennzeichnet,**
**dass** der Klappmechanismus (1, 2) ein Hebelpaar (1) umfasst, das durch zwei Hebel (11, 12) gebildet wird, von denen der eine am Polsterträger (T) schwenkbar angelenkt ist oder am Polsterträger (T) starr angebracht ist, und der andere schwenkbar an einer Bodenbaugruppe (B) des Kraftfahrzeugs anzulenken ist, wobei beide Hebel (11, 12) an einem Kniegelenk (10, 10') gelenkig miteinander verbunden sind, wobei sie am Kniegelenk (10, 10') einen spitzen Winkel (α) einschließen, und dass beim Umklappen des Polsterträgers (T) aus einer Gebrauchsposition heraus vor die Rückenlehne (R) der spitze Winkel (α) in einen stumpfen Winkel (β) überführt wird, wobei elastische Mittel (LU, SH; 4; D) vorgesehen sind, die einer Rückstellbewegung des vor die Rückenlehne (R) geklappten Polsterträgers (T) in seine Gebrauchsposition entgegenwirken.

2. Kraftfahrzeugsitz nach Anspruch 1, **dadurch gekennzeichnet, dass** beim Erreichen eines stumpfen Winkels (β) mit einem definierten Wert größer 180° eine weitere Zunahme des Winkels (α) durch den Klappmechanismus (1, 2) verhindert wird.

3. Kraftfahrzeugsitz mit
- einer Rückenlehne (R), die zur Bildung einer Stütze für den Rücken eines Sitzbenutzers in eine im wesentlichen aufrechte Gebrauchsposition bringbar ist,
- einem schwenkbar gelagerten Polsterträger (T) für ein Sitzpolster (S), der in seiner Gebrauchsposition eine Sitzfläche für einen Sitzbenutzer definiert, und
- einem Klappmechanismus (1, 2) zum Umklappen des Polsterträgers (T) vor die Rückenlehne (R), so dass sich der Polsterträger (T) im Wesentlichen entlang der Rückenlehne (R) erstreckt, wenn sich diese in ihrer aufrechten Gebrauchsposition befindet,
**dadurch gekennzeichnet,**
**dass** der Klappmechanismus (1, 2) ein Hebelpaar (1) umfasst, das durch zwei Hebel (11, 12) gebildet wird, von denen der eine am Polsterträger (T) schwenkbar angelenkt ist oder am Polsterträger (T) starr angebracht ist, und der andere schwenkbar an einer Bodenbaugruppe (B) des Kraftfahrzeugs anzulenken ist, wobei beide Hebel (11, 12) an einem Kniegelenk (10') gelenkig miteinander verbunden sind, das in einer an einem der Hebel (11, 12) vorgesehenen Führungseinrichtung (5) geführt ist, und dass die Führungseinrichtung (5) eine Unstetigkeitsstelle (50a) aufweist, die das Kniegelenk (10') überfährt, wenn der Polsterträger (T) aus einer Gebrauchsposition heraus vor die Rückenlehne (R) geklappt wird, so dass das Kniegelenk (10') beim Hochklappen des Polsterträgers (T) vor die Rückenlehne (R) in einen Abschnitt (5a) der Führungseinrichtung (5) hinter der Unstetigkeitsstelle gelangt, wobei elastische Mittel (D) vorgesehen sind, die einer Rückstellbewegung des vor die Rückenlehne (R) geklappten Polsterträgers (T) in seine Gebrauchsposition entgegenwirken.

4. Kraftfahrzeugsitz nach Anspruch 3, **dadurch gekennzeichnet, dass** die Unstetigkeitsstelle (50a) durch eine Abwinklung der Führungseinrichtung (5) in einem Endabschnitt (5a) der Führungseinrichtung (5) gebildet wird.

5. Kraftfahrzeugsitz nach einem der vorhergehenden Ansprüche, **dadurch gekennzeichnet, dass** Mittel (25, 52) vorgesehen sind, die beim Umklappen des Polsterträgers (T) den Stellweg mindestens eines Hebels (12) des Hebelpaares (1) begrenzen und die beim Erreichen eines vorgebbaren Winkels (β) zwischen den beiden Hebeln (11, 12) des Hebelpaares (1) einer weiteren Bewegung des mindestens einen Hebels (12) entgegenwirken, die zu einer Vergrößerung des Winkels (β) führen würde.

6. Kraftfahrzeugsitz nach Anspruch 5, **dadurch gekennzeichnet, dass** die Mittel (25, 52) zur Begrenzung des Stellweges durch einen Anschlag gebildet werden.

7. Kraftfahrzeugsitz nach Anspruch 6, **dadurch gekennzeichnet, dass** der Anschlag (25, 52) die Bewegung eines Hebels (12) des Gelenkhebelpaares (1) begrenzt, wobei der mit dem Anschlag (25, 52) zusammenwirkende Hebel (12) bevorzugt an einer Bodenbaugruppe (B) eines Kraftfahrzeugs anlenkbar ist.

8. Kraftfahrzeugsitz nach Anspruch 7, **dadurch gekennzeichnet, dass** der Anschlag (25, 52) an einer Bodenbaugruppe (B) eines Kraftfahrzeugs vorzusehen ist oder an einem Hebel (11) des Gelenkhebelpaares (1) vorgesehen ist.

9. Kraftfahrzeugsitz nach Anspruch 8, **dadurch gekennzeichnet, dass** der Anschlag (52) an einer Führungseinrichtung (5) an einem Hebel (11) des Hebelpaares (1) gebildet ist und dass der andere Hebel (12) des Hebelpaares (1) in dieser Führungseinrichtung (5) geführt ist.

10. Kraftfahrzeugsitz nach Anspruch 9, **dadurch gekennzeichnet, dass** der andere Hebel (12) mit einem das Gelenk (10') des Hebelpaares (1) bildenden Führungselement in der Führungseinrichtung (5) geführt ist.

11. Kraftfahrzeugsitz nach Anspruch 9 oder 10, **dadurch gekennzeichnet, dass** der Anschlag (52) an einem abgewinkelten Endabschnitt (5a) der Führungseinrichtung (5) gebildet ist.

12. Kraftfahrzeugsitz nach Anspruch 3 oder einem der Ansprüche 9 bis 11, **dadurch gekennzeichnet, dass** die Führungseinrichtung (5) durch ein entlang des einen Hebels (11) des Hebelpaares (1) erstrecktes Langloch (50) gebildet wird.

13. Kraftfahrzeugsitz nach einem der vorhergehenden Ansprüche, **dadurch gekennzeichnet, dass** die Anlenkstellen (13, 14, H) der beiden Hebel (11, 12) am Polsterträger (T) und an der Bodenbaugruppe (B) sowie das Kniegelenk (10, 10') des Hebelpaares (1) derart bezüglich einer Schwenkachse (20, 20') angeordnet sind, um die der Polsterträger (T) klappbar ist, dass beim Vorliegen des stumpfen Winkels (β) zwischen den beiden Hebeln (11, 12) die Anordnung der Anlenkstellen (H, 13, 14) und des Kniegelenkes (10, 10') einer Schwenkbewegung des Polsterträgers (T) um seine Schwenkachse (20, 20'), die zu einem Zurückklappen des Polsterträgers (T) in die Gebrauchsposition führen würde, entgegenwirkt.

14. Kraftfahrzeugsitz nach einem der vorhergehenden Ansprüche, **dadurch gekennzeichnet, dass** im vor die Rückenlehne (R) geklappten Zustand des Polsterträgers (T) eine Anschlagsfläche (11a) eines Hebels (11) des Hebelpaares (1) an dem Polsterträger (T) anliegt, und hierdurch einem Vorklappen des Polsterträgers (T) entgegenwirkt.

15. Kraftfahrzeugsitz nach einem der vorhergehenden Ansprüche, **dadurch gekennzeichnet, dass** an einem Hebel (12) des Hebelpaares (1) ein Betätigungselement (6) angeordnet ist, durch dessen Betätigung ein stumpfer Winkel (β) zwischen den beiden Hebeln (11, 12) des Hebelpaares (1) in einen spitzen Winkel überführbar ist, um den Polsterträger (T) wieder in die Gebrauchsposition zurückklappen zu können.

16. Kraftfahrzeugsitz nach einem der vorhergehenden Ansprüche, **dadurch gekennzeichnet, dass** die elastischen Mittel (4, D) an mindestens einem der Hebel (11, 12) des Hebelpaares angreifen.

17. Kraftfahrzeugsitz nach Anspruch 16, **dadurch gekennzeichnet, dass** die elastischen Mittel (D) am Kniegelenk (10) des Hebelpaares (1) angeordnet sind.

18. Kraftfahrzeugsitz nach Anspruch 17, **dadurch gekennzeichnet, dass** die elastischen Mittel (D) durch eine Drehfeder mit zwei freien Schenkeln (51, 52) gebildet werden, die sich an je einem der Hebel (11, 12) des Hebelpaares (1) abstützen.

19. Kraftfahrzeugsitz nach Anspruch 18, **dadurch gekennzeichnet, dass** die elastischen Mittel (4) genau an einem Hebel (12) des Hebelpaares (1) angreifen, insbesondere an einem mit der Bodenbaugruppe (B) gelenkverbundenen Hebel (12) des Hebelpaares (1).

20. Kraftfahrzeugsitz nach Anspruch 16 oder 19, **dadurch gekennzeichnet, dass** die elastischen Mittel (4) durch eine Linearfeder gebildet werden.

21. Kraftfahrzeugsitz nach einem der vorhergehenden Ansprüche, **dadurch gekennzeichnet, dass** Abschnitte (LU, LH) des Lehnenpolsters (L) und/oder des Sitzpolsters (P) als elastische Mittel dienen, die einer Rückstellbewegung des Polsterträgers (T) aus seiner vor die Rückenlehne (R) geklappten Position heraus entgegenwirken.

22. Kraftfahrzeugsitz nach einem der vorhergehenden Ansprüche, **dadurch gekennzeichnet, dass** das Kniegelenk (10) sich an einer Bodenbaugruppe (B) abstützt, wenn sich der Polsterträger (T) in einer Gebrauchsposition befindet.

23. Kraftfahrzeugsitz nach Anspruch 22, **dadurch gekennzeichnet, dass** das Kniegelenk (10) beim Umklappen des Polsterträgers (T) vor die Rückenlehne (R) von der Bodenbaugruppe (B) abgehoben wird.

24. Kraftfahrzeugsitz nach einem der vorhergehenden Ansprüche, **dadurch gekennzeichnet, dass** die Rückenlehne (R) in Richtung auf die durch den Polsterträger (T) definierte Sitzfläche (F) vorklappbar ist.

25. Kraftfahrzeugsitz nach Anspruch 24, **dadurch gekennzeichnet, dass** die Rückenlehne (R) um eine Achse (A) schwenkbar gelagert ist.

26. Kraftfahrzeugsitz nach einem der vorhergehenden Ansprüche, **dadurch gekennzeichnet, dass** die Schwenkachse (20, 20') des Polsterträgers (T) beweglich gelagert ist.

27. Kraftfahrzeugsitz nach Anspruch 26, **dadurch gekennzeichnet, dass** die Schwenkachse (20, 20') des Polsterträgers (T) an einem Hebel (2) angeordnet ist.

28. Kraftfahrzeugsitz nach Anspruch 27, **dadurch gekennzeichnet, dass** der Hebel (2) mit einem Ende schwenkbar an dem Polsterträger (T) angelenkt ist und an dieser Anlenkstelle die Schwenkachse (20) des Polsterträgers (T) bildet.

29. Kraftfahrzeugsitz nach Anspruch 28, **dadurch gekennzeichnet, dass** der Hebel (2) mit seinem anderen Ende an einer Bodenbaugruppe (B) eines Kraftfahrzeugs anzulenken ist.

30. Kraftfahrzeugsitz nach Anspruch 24 oder 25 und Anspruch 28 oder 29, **dadurch gekennzeichnet, dass** der die Schwenkachse (20, 20') des Polsterträgers (T) bildende Hebel (2) über einen Koppelhebel (3) mit der Rückenlehne (R) in Wirkverbindung steht.

31. Kraftfahrzeugsitz nach Anspruch 30, **dadurch gekennzeichnet, dass** bei einem Vorklappen der Rückenlehne (R) in Richtung auf die durch den Polsterträger (T) definierte Sitzfläche (F) der die Schwenkachse (20) des Polsterträgers (T) bildende Hebel (2) mittels des Koppelhebels (3) derart betätigt wird, dass die Schwenkachse (20) des Polsterträgers (T) in Richtung auf eine Bodenbaugruppe (B) abgesenkt wird.

## Claims

1. A motor vehicle seat with
- a backrest (R) which can be brought into an upright use position to form a support for a seat user's back,
- a pivotably mounted cushion carrier (T) for a seat cushion (S) which, in its use position, defines a seat surface for a seat user, and
- a folding mechanism (1, 2) for folding over the cushion carrier (T) in front of the backrest (R), so that the cushion carrier (T) essentially extends along the backrest (R) when the latter is in its upright use position,
**characterized in that**
the folding mechanism (1, 2) comprises a pair of levers (1), which is formed by two levers (11, 12) of which the one is coupled pivotably to the cushion carrier (T) or is attached rigidly to the cushion carrier (T) and the other is to be coupled pivotably to a floor subassembly (B) of the motor vehicle, wherein the two levers (11, 12) are connected to each other in an articulated manner at a knee joint (10, 10'), with them enclosing an acute angle (α) at the knee joint (10, 10'), and **in that**, when the cushion carrier (T) is folded over from a use position to in front of the backrest (R), the acute angle (α) is transformed into an obtuse angle (β), wherein elastic means (LU, SH; 4; D) are provided which oppose a resetting movement of the cushion carrier (T), being folded in front of the backrest (R), into its use position.

2. The motor vehicle seat as claimed in claim 1, **characterized in that**, when an obtuse angle (β) with a defined value of greater than 180° is achieved, a further increase of the angle (α) by the folding mechanism (1, 2) is prevented.

3. A motor vehicle seat with
- a backrest (R) which can be brought into an essentially upright use position to form a support for a seat user's back,
- a pivotably mounted cushion carrier (T) for a seat cushion which, in its use position, defines a seat surface for a seat user, and
- a folding mechanism (1, 2) for folding over the cushion carrier (T) in front of the backrest (R), so that the cushion carrier (T) essentially extends along the backrest (R) when the latter is in its upright use position,
**characterized in that**
the folding mechanism (1, 2) comprises a pair of levers (1), which is formed by two levers (11, 12) of which the one is coupled pivotably to the cushion carrier (T) or is attached rigidly to the cushion carrier (T) and the other is to be coupled pivotably to a floor subassembly (B) of the motor vehicle, wherein the two levers (11, 12) are connected to each other in an articulated manner at a knee joint (10') which is guided in a guide device (5) provided on one of the levers (11, 12), and **in that** the guide device (5) comprises a point of discontinuity (50a) over which the knee joint moves (10') when the cushion carrier (T) is folded from a use position to in front of the backrest (R), so that, when the cushion carrier (T) is folded upward in front of the backrest (R), the knee joint (10') passes into a section (5a) of the guide device (5) behind the point of discontinuity, wherein elastic means (D) are provided which oppose a resetting movement of the cushion carrier (T), being folded in front of the backrest (R), into its use position.

4. The motor vehicle seat as claimed in claim 3, **characterized in that** the point of discontinuity (50a) is formed by an angled portion of the guide device (5) in an end section (5a) of the guide device (5).

5. The motor vehicle seat as claimed in one of the preceding claims, **characterized in that** means (25, 52) are provided which limit the adjustment distance of at least one lever (12) of the pair of levers (1) during the folding over of the cushion carrier (T) and which, when a predeterminable angle (β) between the two levers (11, 12) of the pair of levers (1) is reached, oppose a further movement of the at least one lever (12), which would lead to an enlargement of the angle (β).

6. The motor vehicle seat as claimed in claim 5, **characterized in that** the means (25, 52) for limiting the adjustment distance are formed by a stop.

7. The motor vehicle seat as claimed in claim 6, **characterized in that** the stop (25, 52) limits the movement of one lever (12) of the pair of articulated levers (1), the lever (12) which interacts with the stop (25, 52) preferably being able to be coupled to a floor subassembly (B) of a motor vehicle.

8. The motor vehicle seat as claimed in claim 7, **characterized in that** the stop (25, 52) is to be provided on a floor subassembly (B) of a motor vehicle or is provided on a lever (11) of the pair of articulated levers (1).

9. The motor vehicle seat as claimed in claim 8, **characterized in that** the stop (52) is formed on a guide device (5) on one lever (11) of the pair of levers (1), and **in that** the other lever (12) of the pair of levers (1) is guided in this guide device (5).

10. The motor vehicle seat as claimed in claim 9, **characterized in that** the other lever (12) is guided in the guide device (5) by a guide element forming the joint (10') of the pair of levers (1).

11. The motor vehicle seat as claimed in claim 9 or 10, **characterized in that** the stop (52) is formed on an angled end section (5a) of the guide device (5).

12. The motor vehicle seat as claimed in claim 3 or one of claims 9 to 11, **characterized in that** the guide device (5) is formed by an elongated hole (50) extended along the one lever (11) of the pair of levers (1).

13. The motor vehicle seat as claimed in one of the preceding claims, **characterized in that** the coupling points (13, 14, H) of the two levers (11, 12) on the cushion carrier (T) and on the floor subassembly (B), and the knee joint (10, 10') of the pair of levers (1) are arranged with respect to a pivot axis (20, 20') about which the cushion carrier (T) can be folded in such a manner that, when the obtuse angle (β) is present between the two levers (11, 12), the arrangement of the coupling points (H, 13, 14) and of the knee joint (10, 10') opposes a pivoting movement of the cushion carrier (T) about its pivot axis (20, 20'), which would lead to the cushion carrier (T) folding back into the use position.

14. The motor vehicle seat as claimed in one of the preceding claims, **characterized in that**, in the state of the cushion carrier (T) in which it is folded in front of the backrest (R), a stop surface (11a) of one lever (11) of the pair of levers (1) bears against the cushion carrier (T) and thereby opposes a forward folding of the cushion carrier (T).

15. The motor vehicle seat as claimed in one of the preceding claims, **characterized in that** an actuating element (6) is arranged on one lever (12) of the pair of levers (1) and by means of its actuation an obtuse angle (β) between the two levers (11, 12) of the pair of levers (1) can be transferred into an acute angle in order to be able to fold back the cushion carrier (T) into the use position again.

16. The motor vehicle seat as claimed in one of the preceding claims, **characterized in that** the elastic means (4, 5) acts on at least one of the levers (11, 12) of the pair of levers.

17. The motor vehicle seat as claimed in claim 16, **characterized in that** the elastic means (5) are arranged on the knee joint (10) of the pair of levers (1).

18. The motor vehicle seat as claimed in claim 17, **characterized in that** the elastic means (5) are formed by a torsion spring with two free limbs (51, 52) which are supported each on one of the levers (11, 12) of the pair of levers (1).

19. The motor vehicle seat as claimed in claim 18, **characterized in that** the elastic means (4) act on exactly one lever (12) of the pair of levers (1), in particular on a lever (12) of the pair of levers (1) that is connected in an articulated manner to the floor subassembly (B).

20. The motor vehicle seat as claimed in claim 16 or 19, **characterized in that** the elastic means (4) are formed by a linear spring.

21. The motor vehicle seat as claimed in one of the preceding claims, **characterized in that** sections (LU, LH) of the backrest cushion (L) and/or of the seat cushion (P) serve as elastic means which oppose a resetting movement of the cushion carrier (T) from its position folded in front of the backrest (R).

22. The motor vehicle seat as claimed in one of the preceding claims, **characterized in that** the knee joint (10) is supported on a floor subassembly (B) when the cushion carrier (T) is in a use position.

23. The motor vehicle seat as claimed in claim 22, **characterized in that**, when the cushion carrier (T) is folded over to in front of the backrest (R), the knee joint (10) is raised from the floor subassembly (B).

24. The motor vehicle seat as claimed in one of the preceding claims, **characterized in that** the backrest (R) can be folded forward in the direction of the seat surface (F) defined by the cushion carrier (T).

25. The motor vehicle seat as claimed in claim 24, **characterized in that** the backrest (R) is mounted pivotably about an axis (A).

26. The motor vehicle seat as claimed in one of the preceding claims, **characterized in that** the pivot axis (20, 20') of the cushion carrier (T) is mounted movably.

27. The motor vehicle seat as claimed in claim 26, **characterized in that** the pivot axis (20, 20') of the cushion carrier (T) is arranged on a lever (2).

28. The motor vehicle seat as claimed in claim 27, **characterized in that** the lever (2) is coupled pivotably by one end to the cushion carrier (T) and, at this coupling point, forms the pivot axis (20) of the cushion carrier (T).

29. The motor vehicle seat as claimed in claim 28, **characterized in that** the lever (2) is to be coupled by its other end to a floor subassembly (B) of a motor vehicle.

30. The motor vehicle seat as claimed in claim 24 or 25 and claim 28 or 29, **characterized in that** the lever (2) forming the pivot axis (20, 20') of the cushion carrier (T) is operatively connected to the backrest (R) via a coupling lever (3).

31. The motor vehicle seat as claimed in claim 30, **characterized in that**, when the backrest (R) is folded forward in the direction of the seat surface (F) defined by the cushion carrier (T), the lever (2) forming the pivot axis (20) of the cushion carrier (T) is actuated by means of the coupling lever (3) in such a manner that the pivot axis (20) of the cushion carrier (T) is lowered in the direction of a floor subassembly (B).

## Revendications

1. Siège de véhicule automobile, comprenant
- un dossier (R) qui, pour former un soutien pour le dos d'un utilisateur du siège, peut être amené dans une position d'utilisation dressée,
- un porte-rembourrage (T) monté pivotant, pour un rembourrage de siège (S) qui définit, dans sa position d'utilisation, une surface d'assise pour un utilisateur du siège, et
- un mécanisme de rabattement (1, 2) pour rabattre le porte-rembourrage (S) devant le dossier (R), de sorte que le porte-rembourrage (T) s'étend sensiblement le long du dossier (R) quand celui-ci se trouve dans sa position d'utilisation dressée,
**caractérisé en ce que**
le mécanisme de rabattement (1, 2) comprend une paire de leviers (1) formée par deux leviers (11, 12), dont l'un est articulé en pivotement sur le porte-rembourrage (T) ou monté rigidement sur le porte-rembourrage (T), et dont l'autre est destiné à être articulé en pivotement sur un groupe structurel de plancher (B) du véhicule automobile, les deux leviers (11, 12) étant reliés l'un à l'autre de façon articulée au niveau d'une articulation à genouillère (10, 10'), en définissant un angle aigu (α) au niveau de l'articulation à genouillère (10, 10'), et **en ce qu'**en rabattant le porte-rembourrage (T) en partant d'une position d'utilisation pour venir devant le dossier (R) l'angle aigu (α) est transformé en un angle obtus (β), et dans lequel sont prévus des moyens élastiques (LU, SH ; 4 ; D) qui s'opposent à un mouvement de retour du porte-rembourrage (T) rabattu devant le dossier (R) vers sa position d'utilisation.

2. Siège de véhicule automobile selon la revendication 1, **caractérisé en ce que** lorsqu'on atteint un angle obtus (β) avec une valeur définie supérieure à 180°, une poursuite de l'augmentation de l'angle (a) est empêchée par le mécanisme de rabattement (1, 2).

3. Siège de véhicule automobile, comprenant
- un dossier (R) qui, pour former un soutien pour le dos d'un utilisateur du siège, peut être amené dans une position d'utilisation sensiblement dressée,
- un porte-rembourrage (T), monté en pivotement, pour un rembourrage de siège (S) qui définit dans sa position d'utilisation une surface d'assise pour un utilisateur du siège, et
- un mécanisme de rabattement (1, 2) pour rabattre le porte-rembourrage (T) devant le dossier (R), de sorte que le porte-rembourrage (T) s'étend sensiblement le long du dossier (R) quand celui-ci se trouve dans sa position d'utilisation dressée,
**caractérisé en ce que**
le mécanisme de rabattement (1, 2) comprend une paire de leviers (1), qui est formée par deux leviers (11, 12), dont l'un est articulé en pivotement sur le porte-rembourrage (T) ou est monté rigidement sur le porte-rembourrage (T), et l'autre est destiné à être articulé en pivotement sur un groupe structurel de plancher (B) du véhicule automobile, dans lequel les deux leviers (11, 12) sont reliés l'un à l'autre de façon articulée au niveau d'une articulation à genouillère (10') qui est guidée dans un moyen de guidage (5) prévu sur l'un des leviers (11, 12), et **en ce que** le moyen de guidage (5) comporte un emplacement d'instabilité (50a) que l'articulation à genouillère (10') dépasse quand le porte-rembourrage (T) est rabattu, en partant de sa position d'utilisation, devant le dossier (R), de sorte que, lors du rabattement du porte-rembourrage (T) vers le haut devant le dossier (R), l'articulation à genouillère (10') parvient dans un tronçon (5a) du moyen de guidage (5) en arrière de l'emplacement d'instabilité, et il est prévu des moyens élastiques (D) qui s'opposent à un mouvement de retour du porte-rembourrage (T) rabattu devant le dossier (R) vers sa position d'utilisation.

4. Siège de véhicule automobile selon la revendication 3, **caractérisé en ce que** l'emplacement d'instabilité (50a) est formé par un coudage du moyen de guidage (5) dans un tronçon terminal (5a) du moyen de guidage (5).

5. Siège de véhicule automobile selon l'une des revendications précédentes, **caractérisé en ce qu'**il est prévu des moyens (25, 52) qui, lors du rabattement du porte-rembourrage (T), limitent la course de positionnement au moyen d'un levier (12) de la paire de leviers (1) et qui, lorsqu'on atteint un angle prédéterminé (β) entre les deux leviers (11, 12) de la paire de leviers (1), s'opposent à une poursuite du déplacement dudit au moins un levier (12) qui mènerait à une augmentation de l'angle (β).

6. Siège de véhicule automobile selon la revendication 5, **caractérisé en ce que** les moyens (25, 52) pour limiter la course de positionnement sont formés par une butée.

7. Siège de véhicule automobile selon la revendication 6, **caractérisé en ce que** la butée (25, 52) limite le mouvement d'un levier (12) de la paire de leviers articulés (1), et le levier (12) qui coopère avec la butée (25, 52) est de préférence capable d'être articulé sur un groupe structurel de plancher (B) d'un véhicule automobile.

8. Siège de véhicule automobile selon la revendication 7, **caractérisé en ce que** la butée (25, 52) doit être prévue au niveau d'un groupe structurel de plancher (B) d'un véhicule automobile, ou bien est prévue sur un levier (11) de la paire de leviers articulés (1).

9. Siège de véhicule automobile selon la revendication 8, **caractérisé en ce que** la butée (52) est prévue au niveau d'un moyen de guidage (5) sur un levier (11) de la paire de leviers (1), et **en ce que** l'autre levier (12) de la paire de leviers (1) est guidé dans ce moyen de guidage (5).

10. Siège de véhicule automobile selon la revendication 9, **caractérisé en ce que** l'autre levier (12) est guidé dans le moyen de guidage (5) avec un élément de guidage qui forme l'articulation (10') de la paire de leviers (1).

11. Siège de véhicule automobile selon la revendication 9 ou 10, **caractérisé en ce que** la butée (52) est formée au niveau d'un tronçon terminal coudé (5a) du moyen de guidage (5).

12. Siège de véhicule automobile selon la revendication 3 ou l'une des revendications 9 à 11, **caractérisé en ce que** le moyen de guidage (5) est formé par un trou oblong (5) qui s'étend le long de l'un des leviers (11) de la paire de leviers (1).

13. Siège de véhicule automobile selon l'une des revendications précédentes, **caractérisé en ce que** les emplacements d'articulation (13, 14, H) des deux leviers (11, 12) sur le porte-rembourrage (T) et sur le groupe structurel de plancher (B) ainsi que l'articulation à genouillère (10, 10') de la paire de leviers (1) sont agencés, par rapport à un axe de pivotement (20, 20'), autour duquel le porte-rembourrage (T) peut être rabattu, de telle façon qu'en présence d'un angle obtus (β) entre les deux leviers (11, 12) l'agencement des emplacements d'articulation (H, 13, 14) et de l'articulation à genouillère (10, 10') s'oppose à un mouvement de pivotement du porte-rembourrage (T) autour de son axe de pivotement (20, 20') qui mènerait à un rabattement en retour du porte-rembourrage (T) vers sa position d'utilisation.

14. Siège de véhicule automobile selon l'une des revendications précédentes, **caractérisé en ce que**, dans la situation du porte-rembourrage (T) rabattu devant le dossier (R), une surface de butée (11a) d'un levier (11) de la paire de leviers (1) est appliquée contre le porte-rembourrage (T), et s'oppose ainsi à un rabattement du porte-rembourrage (T) vers l'avant.

15. Siège de véhicule automobile selon l'une des revendications précédentes, **caractérisé en ce qu'**un élément d'actionnement (6) est agencé sur un levier (12) de la paire de leviers (1), de manière qu'en actionnant cet élément, un angle aigu (β) entre les deux leviers (11, 12) de la paire de leviers (1) peut être transformé en un angle aigu, afin de pouvoir rabattre le porte-rembourrage (T) en retour dans la position d'utilisation.

16. Siège de véhicule automobile selon l'une des revendications précédentes, **caractérisé en ce que** les moyens élastiques (4, D) attaquent l'un au moins des leviers (11, 12) de la paire de leviers.

17. Siège de véhicule automobile selon la revendication 16, **caractérisé en ce que** les moyens élastiques (D) sont agencés au niveau de l'articulation à genouillère (10) de la paire de leviers (1).

18. Siège de véhicule automobile selon la revendication 17, **caractérisé en ce que** les moyens élastiques (D) sont formés par un ressort rotatif comprenant deux branches libres (51, 52) qui s'appuient chacune sur l'un des leviers (11, 12) de la paire de leviers.

19. Siège de véhicule automobile selon la revendication 18, **caractérisé en ce que** les moyens élastiques (4) attaquent exactement un levier (12) de la paire de leviers (1), en particulier un levier (12) de la paire de leviers (1) qui est relié de manière articulée avec le groupe structurel de plancher (B).

20. Siège de véhicule automobile selon la revendication 16 ou 19, **caractérisé en ce que** les moyens élastiques (4) sont formés par un ressort linéaire.

21. Siège de véhicule automobile selon l'une des revendications précédentes, **caractérisé en ce que** des tronçons (LU, LH) du rembourrage de dossier (L) et/ou du rembourrage de siège (P) servent de moyens élastiques qui s'opposent à un mouvement de retour du porte-rembourrage (T) à partir de sa position rabattue devant le dossier (R).

22. Siège de véhicule automobile selon l'une des revendications précédentes, **caractérisé en ce que** l'articulation à genouillère (10) est soutenue sur un groupe structurel de plancher (B) quand le porte-rembourrage (T) se trouve dans une position d'utilisation.

23. Siège de véhicule automobile selon la revendication 22, **caractérisé en ce que** l'articulation à genouillère (10) est soulevée depuis le groupe structurel de plancher (B) lors du rabattement du porte-rembourrage (T) devant le dossier (R).

24. Siège de véhicule automobile selon l'une des revendications précédentes, **caractérisé en ce que** le dossier (R) est susceptible d'être rabattu en avant en direction de la surface d'assise (F) définie par le porte-rembourrage (T).

25. Siège de véhicule automobile selon la revendication 24, **caractérisé en ce que** le dossier (R) est monté pivotant autour d'un axe (A).

26. Siège de véhicule automobile selon l'une des revendications précédentes, **caractérisé en ce que** l'axe de pivotement (20, 20') du porte-rembourrage (T) est disposé de manière mobile.

27. Siège de véhicule automobile selon la revendication 26, **caractérisé en ce que** l'axe de pivotement (20, 20') du porte-rembourrage (T) est agencé sur un levier (2).

28. Siège de véhicule automobile selon la revendication 27, **caractérisé en ce que** le levier (2) est articulé par une extrémité en pivotement sur le porte-rembourrage (T), et forme à cet emplacement d'articulation l'axe de pivotement (20) du porte-rembourrage (T).

29. Siège de véhicule automobile selon la revendication 28, **caractérisé en ce que** le levier (2) est destiné à être articulé par son autre extrémité sur un groupe structurel de plancher (B) d'un véhicule automobile.

30. Siège de véhicule automobile selon la revendication 24 ou 25 et la revendication 28 ou 29, **caractérisé en ce que** le levier (2) qui forme l'axe de pivotement (20, 20') du porte-rembourrage (T) est en liaison d'action avec le dossier (R) via un levier d'accouplement (3).

31. Siège de véhicule automobile selon la revendication 30, **caractérisé en ce que** lors d'un rabattement du dossier (R) vers l'avant en direction de la surface d'assise (F) définie par le porte-rembourrage (T), le levier (2) qui forment l'axe de pivotement (20) du porte-rembourrage (T) est actionné au moyen du levier d'accouplement (3) de telle manière que l'axe de pivotement (20) du porte-rembourrage (T) est abaissé en direction d'un groupe structurel de plancher (B).
